# EUROPÄISCHE PATENTANMELDUNG

(11) **EP 0 625 315 A2**
(43) Veröffentlichungstag der Anmeldung: **23.11.1994**
(21) Anmeldenummer: 94107122.7
(22) Anmeldetag: 06.05.1994
(51) Int. Cl.: A24C 5/32

(54) **Vorrichtung zur Vermeidung eines Strömungsstaus in einem Rohr und Verwendung dieser Vorrichtung in der Zigarettenherstellung**

(30) Priorität: 07.05.1993 DE 4315267
(71) Anmelder: FABRIQUES DE TABAC REUNIES S.A., CH-2003 Neuchâtel-Serrières (CH)
(72) Erfinder: Heichen, Günter, D-10179 Berlin (DE)
(74) Vertreter: Abitz, Walter, Dr.-Ing.

(57) **Zusammenfassung**

Die Erfindung beschreibt eine Vorrichtung zur Vermeidung eine Strömungsstaus in einem Rohr, wobei auftretende Druckschwankungen durch ein Unterdruckventil und ein darüberliegendes Überdruckventil ausgeglichen werden, und zugleich anfallende kleinteilige Feststoffpartikel über das Unterdruckventil in das Rohr zurückgeführt werden können. Die Vorrichtung eignet sich besonders zur Verwendung bei der Zigarettenherstellung.

## Beschreibung

Die Erfindung betrifft eine Vorrichtung zur Vermeidung eines durch ein Strömungsgas verursachten Strömungsstaus in einem Rohr durch Ausleiten eines Teils des Strömungsgases und zur Rückführung von Feststoffteilchen, die in dem ausgeleiteten Teil enthalten sind. Diese Vorrichtung kann insbesondere bei der Zigarettenherstellung im Bereich der Filteransetzmaschine eingesetzt werden.

Bei der Zigarettenherstellung werden die Zigaretten im Bereich der Filteransetzmaschine vorübergehend an Saugtrommeln festgehalten. Dies erfolgt durch Ansaugen der Zigaretten an in der Außenwand der sich drehenden Saugtrommeln befindliche Bohrungen durch einen Unterdruck. Durch An- oder Abschalten des Unterdrucks von den einzelnen Bohrungen können die Zigaretten angesaugt oder wieder freigegeben werden. Der hierfür benötigte Unterdruck wird durch einen in der Maschine befindlichen und mit der Innenseite der Bohrungen verbundenen Ventilator erzeugt (Unterdruckseite des Ventilators). Die auf der Druckseite des Ventilators entstehende Abluft wird durch eine zentrale Absauganlage entfernt. Der Druck auf der Druckseite des Ventilators hängt von der Belegung der Saugtrommeln mit Zigaretten ab. Sind die Saugtrommeln mit Zigaretten belegt, so dringt wenig oder fast gar kein Umgebungsgas durch die Bohrungen ein. Der Druck auf der Druckseite des Ventilators ist daher relativ gering. Sind die Bohrungen der Saugtrommeln jedoch nicht mit Zigaretten belegt, so wird durch die offenen Sauglöcher eine große Menge Umgebungsgas angesaugt, die von dem zentralen Absaugsystem nicht abgeführt werden kann. Der Druck steigt daher an.

Die zentrale Absauganlage fährt mit einem konstanten Unterdruck, der über eine Drosselklappe in der Rohrleitung der zentralen Absauganlage eingestellt wird und der geringfügig höher ist als der Druck des Ventilators auf der Druckseite bei belegten Saugtrommeln. Dies bedeutet jedoch, daß, falls die Saugtrommel nicht belegt ist und die überschüssige Abluft des Ventilators auf der Druckseite von der zentralen Absauganlage nicht abgeführt werden kann, sich ein Stau ergibt, mit der Folge, daß an den Bohrungen der Saugtrommeln kein Unterdruck mehr herrscht und Zigaretten daher an den Trommeln nicht mehr festgehalten werden, sondern abfallen würden und erst wieder fixiert werden können, wenn alle Bohrungen mit Zigaretten belegt sind, so daß sich erneut ein Unterdruck aufbauen kann.

Um dieses Problem zu vermeiden, wurde bisher ein Staubbeutel verwendet, der sich zwischen dem Ventilator und dem zentralen Absaugsystem befindet. Kommt es bei nichtbelegter Saugtrommel zu einem Überdruck auf der Druckseite des Ventilators, so bläht sich der Staubbeutel auf und die Luft oder das Strömungsgas können durch das Gewebe des Beutels entweichen. Fällt der Druck wieder, so fällt bei richtiger Druckeinstellung der Staubbeutel nur etwas zusammen. Darüber hinaus dient dieser bekannte Staubbeutel neben dem Druckausgleich auch zur teilweisen Aufnahme von bei der Zigarettenherstellung anfallendem und über die Saugtrommeln abgesaugtem Staub und ist dazu mit einem Reißverschluß zum Öffnen und Reinigen versehen.

Dieser bekannte Staubbeutel besitzt jedoch einige schwerwiegende Nachteile. Fällt der Druck in dem Rohr zu sehr, so kann es passieren, daß der Staubbeutel in das Rohr gezogen wird und einreißt. Ebenso kommt es, insbesondere bei älteren Beuteln, vor, daß der Beutel bei einem zu starken Überdruck reißt. Bei der Reinigung des Beutels kommt es weiterhin häufig zu Beschädigungen des Reißverschlusses. In all diesen Fällen muß der Staubbeutel durch einen neuen Beutel ersetzt werden, wozu, verbunden mit einem hohen Arbeitsaufwand, die Anlage vorübergehend ausgeschaltet werden muß. Ein weiterer Nachteil des Staubbeutels ist seine Reinigung, die sehr aufwendig und zeitraubend ist.

Aufgabe der vorliegenden Erfindung ist es daher, eine Vorrichtung zur Verfügung zu stellen, die weitgehend störungsfrei arbeitet und sich selbst reinigt.

Diese Aufgabe wird gelöst durch eine Vorrichtung zur Vermeidung eines durch ein Strömungsgas verursachten Strömungsstaus in einem Rohr durch Ausleiten eines Teils des Strömungsgases und zur Rückführung von Feststoffteilchen, die in dem ausgeleiteten Teil enthalten sind, gekennzeichnet durch
einen Trichter, der in das Rohr mündet und der obere Ränder und einen Trichterinnenraum aufweist,
ein Unterdruckventil, das in einer Mündungsöffnung zwischen dem Trichter und dem Rohr angeordnet ist und bei einem bestimmten Unterdruckwert in dem Rohr öffnet, so daß Umgebungsgas aus dem Trichterinnenraum in das Rohr eintritt, und
ein Überdruckventil, das oberhalb des Unterdruckventils in einer Wand des Trichters angeordnet ist und durch einen Kanal mit dem Rohr verbunden ist und bei einem bestimmten Überdruckwert in dem Rohr öffnet, so daß Gas aus dem Rohr über den Kanal in den Trichterinnenraum austritt.

Die Erfindung hat mehrere Vorteile. Zunächst ermöglicht sie die problemlose Durchführung des Saugprozesses und der Verpackung der Zigaretten. Die Druckeinstellbarkeit bei belegter Trommel ist gewährleistet sowie der Druckausgleich bei unbelegter Trommel und jeder dazwischenliegenden Druckschwankung. Sobald sich in dem Rohr durch die Belegung der Saugtrommeln mit Zigaretten von der Druckseite aus ein Überdruck bzw. Strömungsstau aufbaut, wird dieser durch den Kanal und das Überdruckventil, das sich bei dem Überdruck öffnet, in den Trichterinnenraum und weiter in die Umgebung abgeführt. Kommt es andererseits in dem Rohr zu einem Unterdruck, so öffnet das am Trichterboden in der Einmündung des Trichters in das Rohr gelegene Unterdruckventil und läßt Luft oder Gas aus der Umgebung in das Rohr einströmen. Auf diese Weise können Druckschwankungen problemlos ausgeglichen werden. Auch bei einer nicht exakten Einstellung des Druckes in dem Rohr treten keine größeren Komplikationen auf, vielmehr öffnen die Ventile dann nur weiter.

Ein weiterer Vorteil der erfindungsgemäßen Vorrichtung ist, daß sie nahezu wartungsfrei ist. Die bei den bisher verwendeten Staubbeuteln regelmäßig auftretenden Probleme der eingerissenen Beutel und beschädigten Reißverschlüsse können bei der Vorrichtung gemäß der Erfindung nicht vorkommen. Auch die Reinigung des Trichters ist nicht mehr nötig. Soweit durch den Gasstrom kleinteilige Feststoffe, z.B. Staubpartikel oder Brösel, mitgerissen werden und durch das Überdruckventil in den Trichterinnenraum gelangen, werden sie durch das Unterdruckventil abgesaugt und fallen durch das sich bei Unterdruck öffnende Unterdruckventil wieder in das Rohr zurück.

Ein weiterer Vorteil ist, daß der exakte Druck in dem Rohr sich leicht einstellen läßt. Beispielsweise sind durch den Trichter die Unter- und Überdruckventile sichtbar. Weil für die Förderung ein konstanter leichter Unterdruck erwünscht ist, kann (bei belegten Saugtrommeln) durch eine Regulierung der Drosselklappe und damit des Saugdruckes der Absauganlage an dem einen Ende des Rohres der Punkt genau bestimmt werden, an dem das Unterdruckventil öffnet, so daß auf diese Weise der richtige leichte Unterdruck in dem Rohr sehr leicht einstellbar ist.

Als Über- und Unterdruckventile können alle handelsüblichen Ventile eingesetzt werden. Vorteilhafterweise verwendet man jedoch Federbleche. Auf diese Weise ist neben dem Druckausgleich problemlos auch die Überführung der kleinteiligen Partikel aus dem Kanal in den Trichterinnenraum und vom Trichterinnenraum zurück in das Rohr möglich.

Der das Überdruckventil mit dem Rohr verbindende Kanal kann freistehend montiert sein. Vorteilhafterweise wird er jedoch direkt an einer der Außenwände des Trichters angebracht und bildet mit diesem eine Einheit.

Bei der Ausgestaltung der erfindungsgemäßen Vorrichtung gemäß dem Anspruch 4 sind die oberen Trichterränder nach innen gewölbt. Diese Ausgestaltung hat den Vorteil, daß der Gasstrom, der aus dem Rohr durch das Überdruckventil in den Trichter und daraus in die Umgebung entweicht, an diesen (vorzugsweise halbkreisförmigen) Wölbungen der oberen Trichterränder nach unten umgeleitet wird, so daß die kleinen Partikel, wie Staubteilchen oder Brösel, die in dem Gasstrom enthalten sind, nicht in die Umgebung austreten, sondern am Trichterboden gesammelt werden. Eine weitere Verbesserung dieses Sammeleffekts ist durch das in Anspruch 5 beschriebene Siebdach möglich, das den Austritt des Gasstromes ermöglicht, jedoch die Austragung der Partikelteilchen verhindert.

Die Vorrichtung der Erfindung kann direkt auf dafür an dem Rohr vorgesehene Einlässe, beispielsweise Schlitze oder Bohrungen, montiert werden. Vorteilhafterweise ist die Vorrichtung jedoch mit einem Teil des Rohres fest verbunden und bildet damit eine auswechselbare Einheit. Dies hat den Vorteil, daß das Rohrteil zusammen mit dem Trichter und dem Kanal sehr leicht ein- und ausgebaut werden kann, wobei das Rohrteil beispielsweise mit Blechmanschetten, die mit Schnellverschlüssen versehen sind, mit dem Rohr verbunden wird.

Die erfindungsgemäße Vorrichtung eignet sich für alle Fälle der Regulierung und Kontrolle des Drucks eines Gasstromes in einem Rohr. Sie ist jedoch besonders geeignet für die Saugluftregulierung bei der Zigarettenherstellung. Die Vorrichtung kann andererseits auch in Klimaanlagen eingesetzt werden, um Druckstufen zu vermeiden.

Rohr, Kanal und Trichter können aus den üblichen Materialien gefertigt sein, beispielsweise aus (1mm starkem) Stahl oder Blech. Die Form und die Größe des Trichters sind unerheblich. So sind kreisförmige Trichter mit einem konischen Trichterinnenraum ebenso wie Trichter mit einem - von oben gesehen - rechteckigem oder quadratischem Grundriß verwendbar. Vorteilhafterweise beträgt der Winkel der Trichterwände zueinander ca. 60°, da dann die in dem Trichter anfallenden Staubpartikel sich am Trichterboden absetzen und durch das Unterdruckventil wieder in das Rohr zurückgelangen können.

In der erfindungsgemäßen Vorrichtung können alle üblichen Ventile für die Über- und Unterdruckregulierung verwendet werden. Wegen der anfallenden kleinteilige Partikel, wie beispielsweise Staub und Tabakbrösel bei der Förderung von Zigaretten, sollten die verwendeten Ventile nicht nur gasdurchlässig sein, sondern auch den Durchtritt dieser kleinteiligen Partikel zulassen. Die vorzugsweise verwendeten Ventilfederbleche können von beliebiger Stärke und für den spezifischen Verwendungszweck passend sein, beispielsweise Federstahlblech, 0,1 mm/90 mm lang. Um ein Verbiegen der Ventilfederbleche bei einer falschen Druckeinstellung in dem Rohr zu vermeiden, können die Federbleche mit Stützblechen versehen werden. Durch die Wahl der Stärke der Ventilfederbleche (oder allgemein der Ventile) kann der Über- oder Unterdruck vorherbestimmt werden, bei dem die Federbleche (oder allgemein die Ventile) öffnen sollen. Das Überdruckventil muß oberhalb des Unterdruckventils angebracht sein, damit der in den Trichterraum ausgetragene Feststoff sich am Trichterboden sammeln und über das Unterdruckventil in das Rohr zurückgeführt werden kann. Ansonsten ist die genaue Lage des Überdruckventils in der Trichterwand unerheblich. Es sollte jedoch nicht zu nahe bei dem oberen Trichterrand angebracht sein, da sonst die Gefahr besteht, daß Staubteilchen in die Umgebung ausgetragen werden. Es sollte auch nicht zu dicht oberhalb des Unterdruckventils positioniert sein, da andernfalls die am Trichterboden gesammelten Staubteilchen leicht aufgewirbelt werden und das Öffnen des Überdruckventils behindert werden kann.

Das Siebdach, das auf die oberen Trichterränder aufgesetzt wird, ist in seiner Form der Form des Trichters angepaßt und kann daher beispielsweise einen runden, quadratisch oder rechteckigen Grundriß haben. Darüber hinaus kann dieses Siebdach flach ausgestaltet sein oder einen Giebel aufweisen, wodurch die Siebfläche vergrößert und damit die Wirkung des Siebdaches gegen Verschmutzung der Umgebung erhöht wird.

Die Fertigung der erfindungsgemäßen Vorrichtung ist unproblematisch und erfolgt nach bekannten Vorgehensweisen. Beispielsweise können die Federbleche mit einer ihrer Seiten mit der Trichterwand verschweißt (insbesondere punktgeschweißt) oder gegebenenfalls zusammen mit den Stützblechen mit der Trichterwand verschraubt werden. Auf ähnliche Weise erfolgt die Montage des Kanals sowie des Trichters auf dem Rohr.

Ein Ausführungsbeispiel der Erfindung ist in der Zeichnung dargestellt und wird im folgenden näher beschrieben. Es zeigt:
- Fig. 1: einen Querschnitt durch die erfindungsgemäße Vorrichtung und das Rohr,
- Fig. 2: einen Teilausschnitt der Fig. 1 und
- Fig. 3: einen Seitenquerschnitt durch den Trichter.

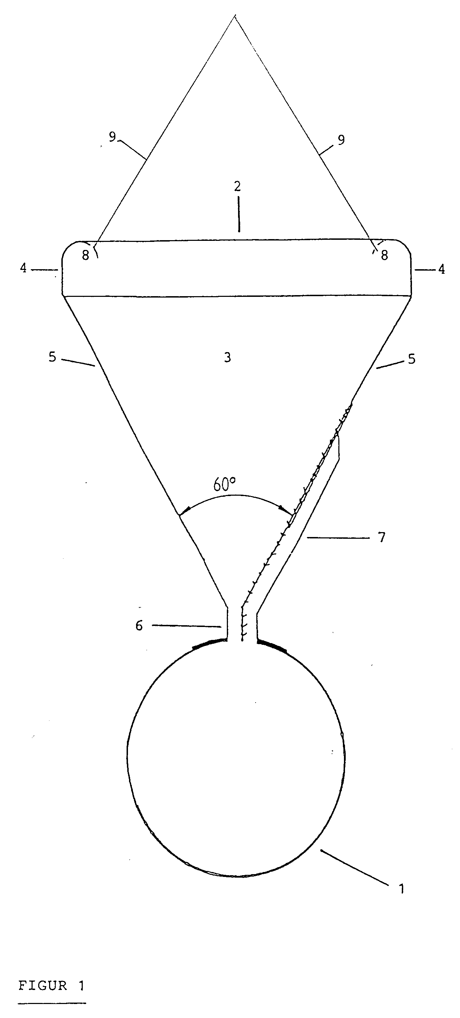

Fig. 1 zeigt im Querschnitt das Rohr 1 sowie darauf aufgesetzt den Trichter 2 mit dem Trichterinnenraum 3, den oberen Rändern 4, den Trichterseitenwänden 5, der Mündungsöffnung 6 sowie dem Kanal 7. Weiterhin sind zu erkennen die zum Trichterboden hin offene, halbkreisförmige Wölbung 8 und das Siebdach 9, sowie daß die Wände 5 des Trichters 2 den bevorzugten Winkel von 60° zueinander aufweisen.

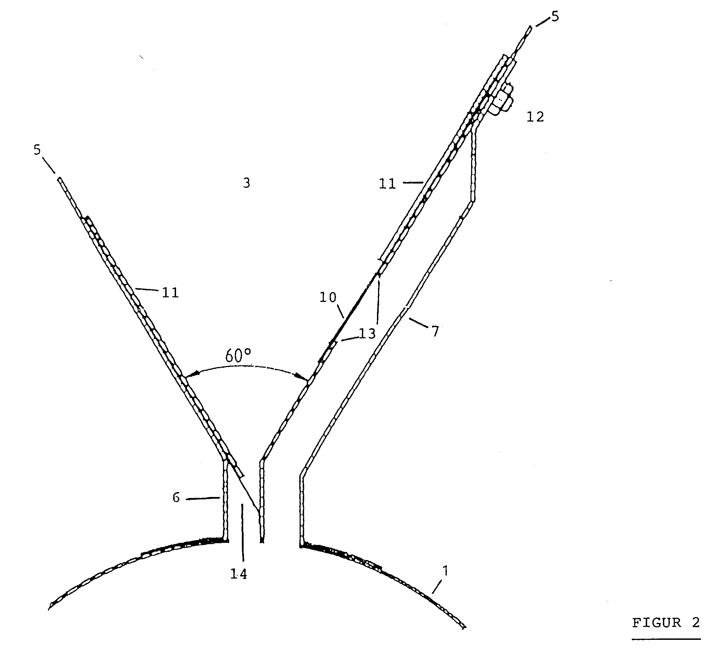

In der Figur 2 ist ein Ausschnitt der Figur 1 zu sehen. Zunächst sind Teile des Rohres 1 und der Trichterwände 5 zu erkennen. Darüber hinaus ist wieder der Kanal 7 zu sehen, der von dem Rohr 1 zu dem Federblechventil 10 (Überdruckventil) führt. In der Fig. 2 ist weiterhin das Stützblech 11 gezeigt, das zusammen mit dem Federblechventil 10 mit einer Schraube 12 an der Innenseite der Trichterwand 5 verschraubt ist. Fig. 2 zeigt, daß das Federblech 10 flächig über dem Durchbruch 13 in der Trichterwand 5 innen an der Trichterwand 5 anliegt. Herrscht in dem Rohr 1 ein Unterdruck so wird das Federblech 10 durch den Sog an die Innenseite der Trichterwand 5 angepreßt. Baut sich jedoch in dem Rohr 1 ein Überdruck auf, so wird das Federblech 10 durch den Druck geöffnet und der Überdruck kann in den Trichterinnenraum 3 entweichen. In Fig. 2 ist weiterhin zusammen mit einem zweiten Stützblech 11 das Federblechventil 14 (Unterdruckventil) gezeigt. Das Federblechventil 14 liegt, wenn kein Druckunterschied zwischen dem Trichterinnenraum 3 und dem Rohr 1 herrscht, durch leichte Federkraft mit der Dichtkante an der Trichterwand 5 in der Mündung 6 an und verschließt auf diese Weise im Stillstand das Rohr. Baut sich in dem Rohr 1 ein Überdruck auf, so wird das Federblech 14 noch fester an die Trichterwand 5 gepreßt. Sobald sich jedoch ein Unterdruck in dem Rohr 1 bildet, öffnet das Federblech 14 und ermöglicht auf diese Weise den Druckausgleich und die Rückführung von vorhandenen Staubpartikeln oder Tabakbröseln. In dem Rohr 1 sollte möglichst immer ein geringer Unterdruck herrschen. Dieser leichte Unterdruck kann sehr leicht eingestellt werden durch optische Kontrolle des Federblechs 14, das in diesem Falle leicht vibriert. Bei diesem leichten Unterdruck werden außerdem durch regelmäßiges, leichtes Öffnen des Federblechs 14 kontinuierlich die anfallenden Tabakbrösel in das Rohr 1 zurückgeführt. In Fig. 2 ist schließlich wiederum der bevorzugte Winkel von 60° zwischen den Trichterseitenwänden 5 zu erkennen.

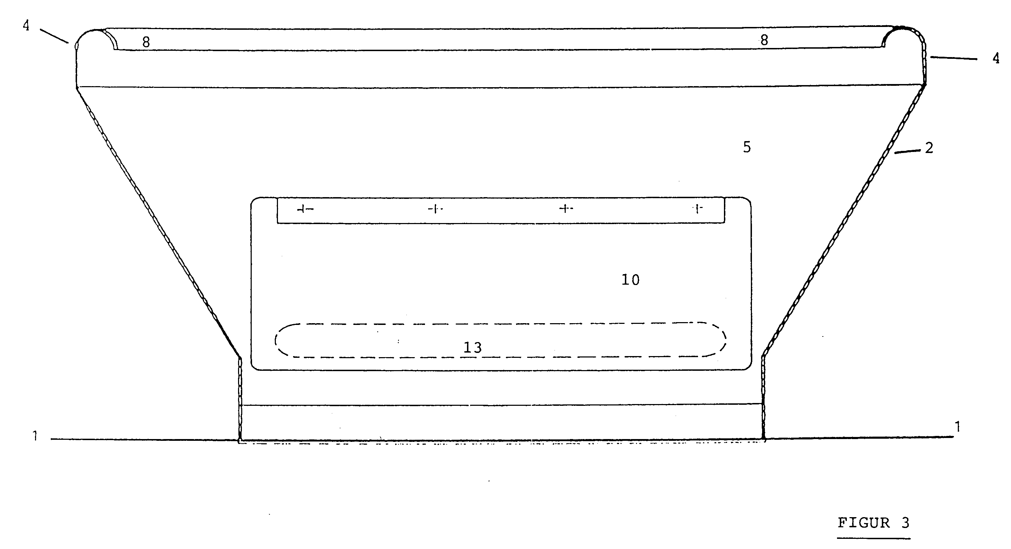

Fig. 3 zeigt einen Seitenquerschnitt durch einen Trichter 2 mit einem rechteckigen Grundriß. Zu erkennen ist neben dem teilweise gezeigten Rohr 1 das Federblech 10, dessen eine Längsseite mit der Innenseite der Trichterwand 5 verschraubt ist. Die gestrichelte Linie kennzeichnet den Durchbruch 13 der Trichterwand 5, durch den Gas- und Feststoffteilchen beim Öffnen des Federblechs 10 austreten könnnen. Fig. 3 zeigt weiterhin den oberen Trichterrand 4 mit der nach innen gerichteten, halbkreisförmigen und nach unten offenen Wölbung 8. Durch diese Wölbung werden aufsteigende Staubteile wieder nach unten umgeleitet, so daß nur wenig Staub über den oberen Trichterrand austreten kann, wobei dieser Reststaub durch das (nicht gezeigte) Siebdach aufgefangen werden kann.

## Patentansprüche

1. Vorrichtung zur Vermeidung eines durch ein Strömungsgas verursachten Strömungsstaus in einem Rohr (1) durch Ausleiten eines Teils des Strömungsgases und zur Rückführung von Feststoffteilchen, die in dem ausgeleiteten Teil enthalten sind, gekennzeichnet durch
einen Trichter (2), der in das Rohr (1) mündet und der obere Ränder (4) und einen Trichterinnenraum (3) aufweist,
ein Unterdruckventil (14), das in einer Mündungsöffnung (6) zwischen dem Trichter (2) und dem Rohr (1) angeordnet ist und bei einem bestimmten Unterdruckwert in dem Rohr (1) öffnet, so daß Umgebungsgas aus dem Trichterinnenraum (3) in das Rohr (1) eintritt, und
ein Überdruckventil (10), das oberhalb des Unterdruckventils (14) in einer Wand (5) des Trichters (2) angeordnet ist und durch einen Kanal (7) mit dem Rohr (1) verbunden ist und bei einem bestimmten Überdruckwert in dem Rohr (1) öffnet, so daß Gas aus dem Rohr (1) über den Kanal (7) in den Trichterinnenraum (3) austritt.

2. Vorrichtung nach Anspruch 1, dadurch gekennzeichnet, daß das Unterdruckventil (14) und das Überdruckventil (10) jeweils ein Federblech ist.

3. Vorrichtung nach Anspruch 1 oder 2, dadurch gekennzeichnet, daß der Kanal (7) direkt an einer Außenseite der Trichterwand (5) angebracht ist.

4. Vorrichtung nach einem der Ansprüche 1-3, dadurch gekennzeichnet, daß die oberen Ränder (4) des Trichters (2) mit einer zum Trichterinnenraum (3) gerichteten und zum Trichterboden hin offenen Wölbung (8) versehen sind.

5. Vorrichtung nach einem der Ansprüche 1-4, dadurch gekennzeichnet, daß auf den oberen Rändern (4) des Trichters (2) ein Siebdach (9) angebracht ist.

6. Vorrichtung nach einem der Ansprüche 1-5, dadurch gekennzeichnet, daß sie mit einem Teil des Rohres (1) fest verbunden ist.

7. Verwendung einer Vorrichtung nach einem der Ansprüche 1-6 bei der Zigarettenherstellung.
